# EUROPEAN PATENT APPLICATION

(11) **EP 3 187 984 A1**
(43) Date of publication of application: **05.07.2017**
(21) Application number: 16162169.3
(22) Date of filing: 24.03.2016
(51) Int. Cl.: G06F 3/041, G06F 1/32

(54) **METHOD AND DEVICE FOR DETERMINING TOUCH GESTURE, COMPUTER PROGRAM AND RECORDING MEDIUM**

(30) Priority: 25.11.2015 CN 201510829124
(71) Applicant: Xiaomi Inc., Beijing 100085 (CN)
(72) Inventor: YANG, Kun, Haidian District 100085 Beijing (CN); TAO, Jun, Haidian District 100085 Beijing (CN); JIANG, Zhongsheng, Haidian District 100085 Beijing (CN)
(74) Representative: Sadler, Peter Frederick

(57) **Abstract**

The present disclosure discloses a method and device for determining a touch gesture and belongs to the field of electronic device, a computer program and a recording medium. The method for determining the touch gesture comprises: acquiring (201) a first induction signal and a second induction signal or a second touch gesture, determining the second touch gesture corresponding with the second induction signal when the second induction signal has been acquired; and determining (202) that the touch gesture has been detected, or reporting the first touch gesture corresponding with the first induction signal and the second touch gesture, when it is determined that the first touch gesture corresponding with the first induction signal and the second touch gesture are the same. With the combination of the first touch gesture corresponding with the first induction signal and the second touch gesture corresponding with the second induction signal, the recognition accuracy of the touch gesture may be improved, and an accidental touch event caused during carry and transport time is effectively avoided to be regarded as a normal touch gesture of a user.

## Description

### Technical Field

The present disclosure relates to the field of electronic equipment and particularly to a method and device for determining a touch gesture, a computer program and a recording medium.

### Background

The touch screen can reduce the user's usage restrictions to enrich the user's operations and the realized functions, and hence are widely used in the field of electronic equipment.

In actual use, the electronic device identifies the user's touch gesture through a touch screen to perform the operation corresponding with the touch gesture. However, for an accidental operation event caused during carry and transport time, the touch screen also tends to identify it as a normal touch gesture by a user. Therefore, only by the touch screen, the user's touch gesture cannot be accurately identified.

### Summary

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

To solve the problem how to accurately identify a touch gesture of a user, the disclosure provides a method and device for determining a touch gesture, a computer program and a recording medium. The technical solution is as follows:
According to a first aspect of embodiments of the present disclosure, there is provided a method for determining a touch gesture. The method is used for an electronic device comprising a first induction unit and a second induction unit, and both interconnected. The following steps are executed by utilizing the first induction unit:
   acquiring a first induction signal and a second induction signal or a second touch gesture, and determining the second touch gesture corresponding with the second induction signal when the second induction signal has been acquired, wherein the first induction signal is a parameter induced and generated by the first induction unit, and the second induction signal is a parameter induced and generated by the second induction unit;
   determining the detected touch gesture or reporting a first touch gesture corresponding with the first induction signal and the second touch gesture, when the first touch gesture corresponding with the first induction signal and the second touch gesture are determined to be the same touch gesture;
   the first induction unit is one of a touch chip and a motion sensor, the second induction unit is the other one of the touch chip and the motion sensor.

Optionally, said acquiring the first induction signal and the second induction signal or the second touch gesture comprises:
sending an information acquisition request to the second induction unit when determining that the first induction signal has been acquired, wherein the information acquisition request is configured to trigger the second induction unit to feed back the second induction signal or the second touch gesture; and
receiving the second induction signal or the second touch gesture fed back by the second induction unit.

Optionally, when determining that the first induction signal has been acquired, sending the information acquisition request to the second induction unit comprises:
, sending the information acquisition request to the second induction unit when determining that the first induction signal has been acquired, and when there exists the first touch gesture corresponding with the first induction signal.

Optionally, said acquiring the first induction signal and the second induction signal or the second touch gesture comprises:
acquiring the first induction signal after receiving the second induction signal or the second touch gesture sent by the second induction unit.

In one particular embodiment, the steps of the method for determining a touch gesture are determined by computer program instructions.

Consequently, according to a third aspect, the invention is also directed to a computer program for executing the steps of a method for determining a touch gesture as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solution provided by the embodiments of the present disclosure may comprise the following advantageous effects: the accuracy to identify the touch gesture may be ensured by acquiring the second induction signal from the second induction unit and by the combined determination of the first touch gesture corresponding with the first induction signal and the second touch gesture corresponding with the second induction signal after the first induction unit acquires the first induction signal, so as to solve the technical problem that the touch gesture of the user may not be accurately identified only with the touch screen in the related arts, and the accuracy to identify the touch gesture may be improved.

Optionally, said receiving the second induction signal sent by the second induction unit comprises:
receiving the second induction signal sent when the second induction unit determines that there exists the second touch gesture corresponding with the second induction signal.

The technical solution provided by the embodiments of the present disclosure may comprises the following advantageous effects: the accuracy to identify the touch gesture may be ensured by acquiring the first induction signal sensed by a second sensor unit itself, and determining the on the basis of the combination of the first touch gesture corresponding with the first induction signal and the second touch gesture corresponding with the second induction signal after acquiring the second induction signal or the second touch gesture reported by the second induction unit, so as to solve the technical problem that the touch gesture of the user may not be accurately identified only with the touch screen in the related arts, and the accuracy to identify the touch gesture may be improved.

Optionally, when the first touch gesture corresponding with the first induction signal and the second touch gesture are determined to be the same touch gesture, determining that the touch gesture has been detected or reporting the first touch gesture corresponding with the first induction signal and the second touch gesture comprises:
determining whether the first touch gesture corresponding with the first induction signal and the second touch gesture are the same touch gesture, or reporting the first touch gesture corresponding with the first induction signal and the second touch gesture, when the interval between the generating time of the first induction signal and the generating time of the second induction signal / the second touch gesture is less than a preset time interval threshold.

The technical solution provided by the embodiments of the present disclosure may comprises the following advantageous effects: determining whether the first touch gesture and the second touch gesture are the same touch gesture is considered only when the interval between the generating time of the first induction signal and the generating time of the second induction signal or the second touch gesture corresponding with the second induction signal is less than a preset time interval threshold, so as to be able to effectively avoid determining the accidental touch event caused during carry and transport as a normal touch gesture of the user.

Optionally, when the first induction unit is the touch chip and the second induction unit is the motion sensor, the first induction signal is a touch parameter generated when an induction screen of the touch chip is touched, and the second induction signal is a motion parameter generated when the motion sensor induces the motion of the electronic device.

The first induction signal is the motion parameter generated when the motion sensor induces the motion of the electronic device, and the second induction signal is the touch parameter generated when the induction screen of the touch chip is touched, when the first induction unit is the motion sensor and the touch chip is said touch chip.

The technical solution provided by the embodiments of the present disclosure may comprises the following advantageous effects: the touch gesture of the user can be determined by the combination of the first touch gesture corresponding with the first induction signal and the second touch gesture corresponding with the second induction signal and particularly by the combination of the touch chip and the motion sensor, so as to be able to improve the accuracy to identify the touch gesture, and effectively avoid determining the accidental touch event caused during carry and transport as a normal touch gesture by the user. The first induction unit may acquire the second induction signal. According to the first induction signal and the second induction signal, the first induction unit may determine whether the touch gesture is detected and that the touch gesture is which touch gesture, so as to be able to save the processing resource of an upper processing unit.

According to a second aspect of embodiments of the present disclosure, there is provided a device for determining a touch gesture. The device is used for electronic device comprising a first induction unit and a second induction unit, both interconnected, and comprises:
an acquisition module configured to acquire a first induction signal and a second induction signal or a second touch gesture, and determine the second touch gesture corresponding with the second induction signal when the second induction signal has been acquired, wherein the first induction signal is a parameter induced and generated by the first induction unit, and the second induction signal is a parameter induced and generated by the second induction unit;
a determining module configured to determine that the touch gesture has been detected , or to report a first touch gesture corresponding with the first induction signal and the second touch gesture, when the first touch gesture corresponding with the first induction signal and the second touch gesture are determined to be the same touch gesture;
the first induction unit is one of a touch chip and a motion sensor, the second induction unit is the other one of the touch chip and the motion sensor.

Optionally, the acquisition module comprises:
a request sub-module configured to send an information acquisition request to the second induction unit when determining that the first induction signal has been acquired, wherein the information acquisition request is configured to trigger the second induction unit to feed back the second induction signal or the second touch gesture;
a receiving sub-module configured to receive the second induction signal or the second touch gesture fed back by the second induction unit.

Optionally, the request sub-module is still configured to:
determine to acquire the first induction signal, and send the information acquisition request to the second induction unit when there exists the first touch gesture corresponding with the first induction signal.

Optionally, the acquisition module further comprises:
an acquisition sub-module configured to acquire the first induction signal after receiving the second induction signal or the second touch gesture sent by the second induction unit.

Optionally, the acquisition sub-module is still configured to:
receive the second induction signal sent when the second induction unit determines that there exists the second touch gesture corresponding with the second induction signal.

Optionally, the determining module is still configured to:
determine whether the first touch gesture corresponding with the first induction signal and the second touch gesture are the same touch gesture, or report the first touch gesture corresponding with the first induction signal and the second touch gesture, when the interval between the generating time of the first induction signal and the generating time of the second induction signal / the second touch gesture is less than the preset time interval threshold.

Optionally, when the first induction unit is the touch chip and the second induction unit is the motion sensor, the first induction signal is a touch parameter generated when an induction screen of the touch chip is touched, and the second induction signal is a motion parameter generated when the motion sensor induces the motion of the electronic device.

The first induction signal is the motion parameter generated when the motion sensor induces the motion of the electronic device, and the second induction signal is the touch parameter generated when the induction screen of the touch chip is touched, when the first induction unit is the motion sensor and the touch chip is said touch chip.

It is to be understood that both the foregoing general description and the following detailed description are exemplary and are not restrictive of the invention.

### Brief Description of the Drawings

The accompanying drawings, incorporated in and constitute a part of this specification, illustrate embodiments consistent with the invention and, together with the description, serve to explain the principles of the invention.
Figures IA-IB are structural schematic diagrams showing electronic device, according to a part of exemplary embodiments;
Figure 2 is a flow chart showing a method for determining a touch gesture, according to an exemplary embodiment;
Figure 3A is a flow chart showing a method for determining a touch gesture, according to another exemplary embodiment;
Figure 3B is a flow chart showing a method for determining a touch gesture, according to yet another exemplary embodiment;
Figure 4A is a flow chart showing a device for determining a touch gesture, according to an exemplary embodiment;
Figure 4B is a block diagram showing a device for determining a touch gesture, according to an exemplary embodiment; and
Figure 5 is a block diagram showing a device for determining a touch gesture, according to an exemplary embodiment.

### Detailed Description

Reference will now be made in detail to exemplary embodiments, examples are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

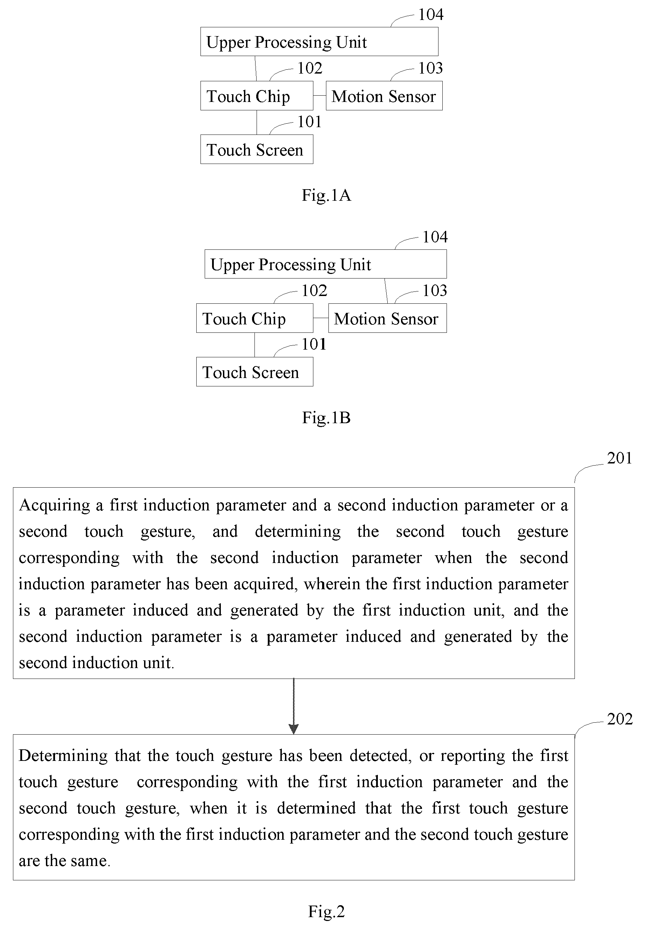

Figure 1A is a structural schematic diagram showing electronic device, according to a part of exemplary embodiments. As shown in Figure 1A, the electronic device may comprise a touch screen 101, a touch chip 102, a motion sensor 103 and an upper processing unit 104.

The touch screen 101 is connected with the touch chip 102. The touch screen 101 of the electronic device generates an induction signal corresponding with the touch gesture when being touched.

The touch chip 102 is connected with the touch screen 101, the upper processing unit 104 and the motion sensor 103, respectively.

The motion sensor 103 is connected whit the touch chip 102 to collect the motion parameters of the electronic device, for example, an accelerated speed, an angular speed, etc.

The upper processing unit 104 is connected with the touch chip 102 to further process the data results reported by the touch chip 102.

It needs additional description that the above "connection" may be wired connection, wireless connection and a channel providing information transfer between two units, two modules or two chips which are connected with each other.

Figure 1B is a structural schematic diagram showing another electronic device, according to a part of exemplary embodiments. As shown in Figure 1B, the electronic device may comprise the touch screen 101, the touch chip 102, the motion sensor 103 and the upper processing unit 104.

The touch screen 101 is connected with the touch chip 102. The touch screen 101 of the electronic device generates the induction signal corresponding with the touch gesture when being touched.

The touch chip 102 is connected with the touch screen 101 and the motion sensor 103, respectively.

The motion sensor 103 is connected whit the touch chip 102 and the upper processing unit 104 respectively to collect the motion parameters of the electronic device, for example, the accelerated speed, the angular speed, etc.

The upper processing unit 104 is connected with the motion sensor 103 to further process the data results reported by the motion sensor 103.

It needs additional description that the above "connection" may be wired connection, wireless connection and the passage providing information transfer between two units, two modules or two chips, connected with each other.

Figure 2 is a flow chart showing a method for determining a touch gesture, according to an exemplary embodiment. As shown in Figure 2, the method for determining the touch gesture is applied in a first induction unit. The first induction unit here may be the touch chip shown in Figure 1A or the motion sensor shown in Figure 1B and comprises the following steps.

In step 201, acquiring a first induction signal and a second induction signal or a second touch gesture, and determining the second touch gesture corresponding with the second induction signal when the second induction signal has been acquired, wherein the first induction signal is a parameter induced and generated by the first induction unit, and the second induction signal is a parameter induced and generated by a second induction unit.

In step 202, determining that the touch gesture has been detected, or reporting the first touch gesture corresponding with the first induction signal and the second touch gesture, when the first touch gesture corresponding with the first induction signal and the second touch gesture are determined to be the same touch gesture.

The first induction unit in above steps is one of the touch chip and the motion sensor. The second induction unit is the other one of the touch chip and the motion sensor. The first induction unit is connected with the second induction unit.

In a summary, with respect to the method for determining the touch gesture in the embodiment of the present disclosure, the touch gesture of a user is determined by the combination of the first touch gesture corresponding with the first induction signal and the second touch gesture corresponding with the second induction signal and particularly by the combination of the touch chip and the motion sensor, so as to be able to improve the accuracy to identify the touch gesture, and effectively avoid determining the accidental touch event caused during carry and transport as a normal touch gesture by the user. The first induction unit may acquire the second induction signal. According to the first induction signal and the second induction signal, the first induction unit may determine whether the touch gesture is detected and that the touch gesture is which touch gesture, so as to be able to save the processing resource of the upper processing unit.

The first induction unit in above embodiments is one of the touch chip and the motion sensor. The second induction unit is the other one of the touch chip and the motion sensor. The first induction unit is connected with the second induction unit. When the first induction unit is the touch chip and the second induction unit is the motion sensor, the first induction signal is a touch parameter generated when an induction screen of the touch chip is touched, and the second induction signal is a motion parameter generated when the motion sensor induces the motion of the electronic device. The first induction signal is the motion parameter generated when the motion sensor induces the motion of the electronic device, and the second induction signal is the touch parameter generated when the induction screen of the touch chip is touched, when the first induction unit is the motion sensor and the touch chip is said touch chip.

In the following, it is taken as an example that the detailed solution of the present disclosure is described when the first induction unit is the touch chip or the motion sensor.

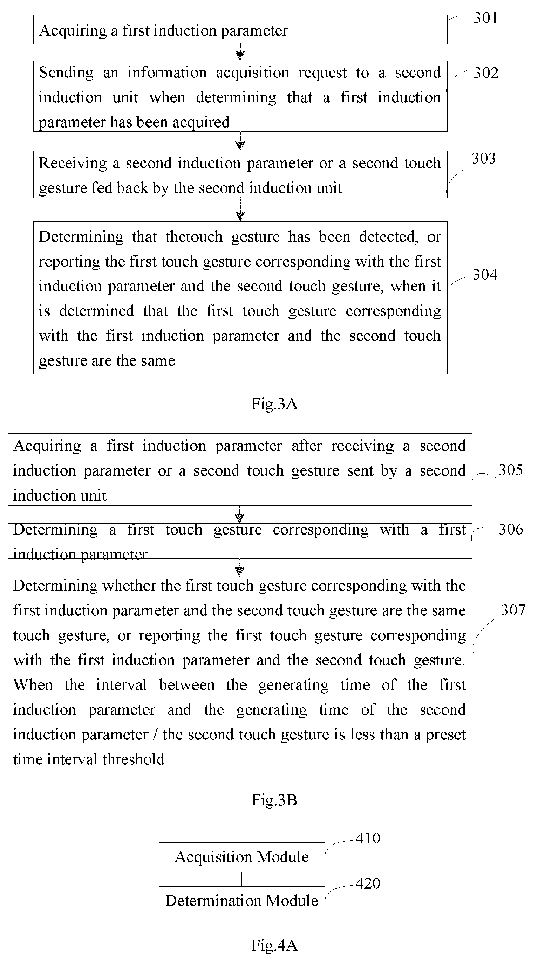

In a possibly realized scene, after acquiring the first induction signal, the first induction unit may actively request to acquire the second induction signal or the second touch gesture sensed by the second induction unit. Specifically seeing Figure 3A, the following embodiment is illustrated by the first induction unit as the touch chip and by the second induction unit as the motion sensor.

Figure 3A is a flow chart showing a method for determining a touch gesture, according to another exemplary embodiment. The method for determining the touch gesture is used for the first induction unit, and comprises the following steps.

In step 301, acquiring the first induction signal.

The first induction signal is a parameter induced and generated by the first induction unit.

Using the first induction unit as the touch chip as an example, when the touch screen is touched, the touch chip generates a signal corresponding with the touch gesture. Correspondingly, the touch chip generates the induction signal corresponding with the touch gesture, that is, the first induction signal.

Generally speaking, when inducing the first induction signal, the first induction unit may generally determine that there exists the touch gesture at this time. To be able to accurately determine the touch gesture, the first induction signal may execute step 302 at this time.

In step 302, sending an information acquisition request to the second induction unit when determining that the first induction signal has been acquired.

When the first induction unit determines that the first induction signal has been acquired, it indicates that there may exist the touch gesture. Therefore, to be able to accurately determine whether it is the touch gesture, the information acquisition request may be sent to the second induction unit, to actively acquire the second induction signal in the second induction unit, or the touch gesture determined by the second induction unit according to the second induction signal.

The information acquisition request is configured to trigger the second induction unit to feed back the second induction signal or the second touch gesture.

After receiving the acquisition request sent by the first induction unit, the second induction unit not only may feed back the second induction signal but also may feed back the second touch gesture corresponding with the second induction signal.

The detailed solution of the present disclosure is illustrated in the following example; that is, the way to acquire the second induction signal is that the second induction unit feeds back the second induction signal to the first induction unit after receiving the information acquisition request.

For example, it is still taken as example that the first induction unit is the touch chip while the second induction chip is the motion sensor. When acquiring the touch parameter, the touch chip still needs to acquire the motion parameter. The touch chip acquires the touch parameter, and sends the information acquisition request to the motion sensor when there exists the first touch gesture corresponding with the touch parameter. After receiving the information acquisition request, the motion sensor feeds back the motion parameter to the touch chip or feeds back the second touch gesture corresponding with the motion parameter.

Optionally, when the first induction unit determines that the first induction signal has been acquired, the information acquisition request may be sent to the second induction unit when determining that there exists the first touch gesture corresponding with the first induction signal. That is, the first induction unit determines that there does exist the touch gesture according to the acquired first induction signal and then sends the information acquisition request to the second induction unit.

With respect to a possibly realized way, to ensure that the first induction unit may sense the first induction signal as much as possible, the first induction unit may generally be set to be under a normally open state. The first induction unit under the normally open state is always kept to be an operating state and senses the first induction signal in real time. To reduce the power consumption of the second induction unit, the second induction unit may be set to be under a normally closed state. The second induction unit under the normally closed state is basically kept to be under a non-operating state, and enters into the operating state only when waken up by the first induction unit, to acquire the second induction signal.

When the first induction unit sends the information acquisition request to the second induction unit, the first induction unit may be regarded to wake up the second induction unit. Or, before sending the information acquisition request to the second induction unit, the first induction unit firstly wakes up the second induction unit and then sends the information acquisition request to the waken-up second induction unit.

In step 303, receiving the second induction signal or the second touch gesture fed back by the second induction unit.

After receiving the information acquisition request, the second induction unit may feed back the sensed second induction signal. Or, when determining that there exists the second touch gesture corresponding with the second induction signal, the second induction unit sends the second touch gesture to the first induction unit. At this time, the first induction unit may receive the second induction signal or the second touch gesture fed back by the second induction unit.

For example, it is still taken as an example that the first induction unit is the touch chip while the second induction chip is the motion sensor. After receiving the information acquisition request, the motion sensor may directly feed back the sensed motion parameter (that is, the second induction signal) to the touch chip. Or when determining that there exists the second touch gesture corresponding with the motion parameter, the motion sensor sends the second touch gesture to the touch chip. Correspondingly, the touch chip receives the motion parameter or the second touch gesture.

It needs additional description that when the second induction unit feeds back the second induction signal to the first induction unit, besides acquiring the corresponding first touch gesture according to the first induction signal, the first induction signal may still acquire the corresponding second touch gesture according to the second induction signal. For example, when the motion sensor feeds back the motion parameter to the touch chip, the touch chip not only may acquire the first touch gesture according to the touch parameter but also acquires the corresponding second touch gesture according to the motion parameter.

In step 304, determining that the touch gesture has been detected , or reporting the first touch gesture corresponding with the first induction signal and the second touch gesture, when the first touch gesture corresponding with the first induction signal and the second touch gesture are determined to be the same touch gesture.

The first induction unit may determine the first touch gesture corresponding with the first induction signal according to the first induction signal. If in step 303, the first induction unit acquires the second induction signal, and determines the second touch gesture corresponding with the second induction signal according to the second induction signal at this time.

The first induction unit may determine whether the first touch gesture and the second touch gesture are the same touch gesture. If they are the same touch gesture, the touch gesture is detected, or the first touch gesture corresponding with the first induction signal and the second touch gesture are reported.

In a possibly realized way, the first induction unit may determine the first touch gesture corresponding with the first induction signal according to the corresponding relation between the first induction signal and the preset touch gesture. The first induction unit may determine the second touch gesture corresponding with the second induction signal according to the corresponding relation between the second induction signal and the preset touch gesture.

Generally speaking, as each touch behavior corresponds to one touch gesture, the touch gesture not only forms a certain sliding state on the touch screen of a terminal so that the touch screen generates sliding state information corresponding with the touch gesture (that is, when the user operates a touch operation on the touch screen to generate the touch gesture, the touch gesture corresponds to the size and direction of the sliding and of an accelerating speed relative to a display screen), but also makes the terminal slide relative to a floor, a table and other reference objects to a certain extent so that the motion sensor configured to sense the motion of the electronic device generates motion state information corresponding with the touch gesture (that is, when the user carries out a touch operation on the touch screen to generate the touch gesture, the motion sensor information refers to an angle, the size and direction of the motion and of the accelerating speed of the terminal relative to the floor, the table and other static reference objects).

Obviously, when the touch behavior occurs, the sliding formed on the touch screen and the sliding generated on the terminal are corresponding with each other. Therefore, after acquiring sliding state information formed on a terminal screen by the touch gesture corresponding with the preset touch behavior and movement state information of the terminal caused by the touch gesture, the touch gesture corresponding with the preset touch behavior, the sliding state information and the movement state may be stored correspondingly When in actual use, according to the pre-established corresponding relation between the sliding state information of the terminal and the movement state information of the touch gesture, both corresponded with the same touch behavior, determine whether the current sliding state information, the movement state information and the current touch gesture of the terminal correspond with the same touch behavior.

In another possibly realized way, the first induction unit may store a classifier of the touch gesture in advance. After inputting the first induction signal into the classifier, the first induction unit acquires the output value output by the classifier, and determines the preset touch gesture corresponding with the first induction signal according to the corresponding relation between the output value and the preset touch gesture. Similarly, the first induction unit may still input the second induction signal into the classifier, and determine the preset touch gesture corresponding with the second induction signal according to the corresponding relation between an output value and the preset touch gesture.

Obviously, if the first induction unit receives the second touch gesture fed back directly by the second induction unit, whether the first touch gesture and the second touch gesture are the same touch gesture may be directly determined.

In an actual application, as the motion sensor is very sensitive, the induction signal is generated even if there is slight vibration. Only when the touch chip and the motion sensor both sense parameters within the same time period, and determine the same touch gesture according to these parameters, the determination accuracy of the touch gesture can be guaranteed. Therefore, before determining whether the first touch gesture and the second touch gesture are the same touch gesture, the first induction unit can still determine the interval between the generating time of the first induction signal and the generating time of the second induction signal / the second touch gesture is less than a preset time interval threshold. The preset time interval threshold here may be configured to define the first touch gesture and the second touch gesture to happen within the same time period, for example, it may be defined to be 0.2s.

Only when the interval between the generating time of the first induction signal and the generating time of the second induction signal / the second touch gesture is less than the preset time interval threshold, the first induction unit determines whether the first touch gesture corresponding with the first induction signal and the second touch gesture are the same touch gesture or reports the first touch gesture corresponding with the first induction signal and the second touch gesture.

For example, when the interval between the generating time of the first induction signal and the generating time of the second induction signal or the second touch gesture corresponding with the second induction signal is less than the preset time interval threshold (for example, 0.2s), whether the first touch gesture corresponding with the first induction signal and the second touch gesture corresponding with the second induction signal are the same touch gesture is determined, or the first touch gesture corresponding with the first induction signal and the second touch gesture corresponding with the first induction signal are reported to the upper processing unit. The upper processing unit determines whether the first touch gesture and the second touch gesture are the same touch gesture or processes others.

Preferably, if the second induction unit is the motion sensor, when the first induction unit determines the second touch gesture, as the motion sensor is very sensitive, in order to solve the problem that the change of the motion parameter caused by the slight change in an environment causes the waste of processing resource of the electronic device , because the motion parameter is frequently obtained to obtain the effective motion parameter, this embodiment only considers the second induction signal within the preset range. This preset range here is larger than a first threshold and less than a second threshold. If the value of the second induction signal is not within the preset range, it indicates that the electronic device is not effected by an external stress which is not very big or is very small. In this case, the possibility that the user touches the screen is very small. At this time, the determination of the touch gesture this time may be neglected.

With the second induction signal (i.e. the motion parameter) defined within the preset range, the change of the motion parameter caused by the slight change in the environment may be excluded to rapidly acquire the effective motion parameter, and the change of the motion parameter caused by the collision caused during carry and transport and the collision to the screen may be excluded.

Generally speaking, the preset time interval threshold here is configured to define the time difference of the same gesture behavior processed by the first induction unit and the second induction unit. For example, as the motion sensor and the touch chip sense and process the same gesture with different principles, processes and calculation amounts, the output values of the same click gesture by the motion sensor and the touch chip are not output at the same time but have a very small time difference, for example, the output time of the value of the touch chip is later by 0.3ms than that of the motion sensor. At this time, the touch chip may have 0.3ms of time compensation; that is, the output value of the touch chip is output by 0.3ms ahead of time, and the touch chip and a chip of the motion sensor output the values at the same time.

In addition, the preset time interval threshold may still be configured to define the time difference of successive actions acquired when some gesture is identified with the successive actions. For example, in the case that the user slides the screen of a mobile phone to unlock it after the user takes out the mobile phone, the motion parameter has larger changes during the time of taking out the mobile phone. And then the user touches the screen within 1-2 seconds. That is, the motion parameter of the preset time interval threshold before the time of the signal change output by the touch chip needs to be acquired. For example, if the user clicks the screen, the mobile phone also have slight shake while the touch chip detects that there exists the touch signal. At this time, the motion parameter of which the time is the same as the time when the output signal of the touch chip changes is acquired; that is, the preset time interval is zero.

For example, when the user double clicks the screen, the touch gesture may be determined to be double click on the screen by the user according to the signal which is detected by the touch chip and where the touch is continuously carried out on the same position within a small area. And then the motion parameter within the preset time interval is acquired. If two of the motion parameters are increased within the time period, and the time of the increasing motion parameter and the time when the touch chip collects a touch signal are the same time, and the maximum value of the motion parameter is less than some preset value, it can be determined that the change characteristic of the motion parameter within the preset time period accords to the change characteristic of the operation of the double clicks by the user. With the signal and the motion parameter detected by the touch chip, the operation by the user may be determined to be double clicks on the screen.

In the above context, if two of the motion parameters are also increased, and the time of the increased motion parameter and the time when the touch chip collects the touch signal are the same time, but the maximum value of the motion parameter is larger than the maximum value of the motion parameter which may be caused by the double clicks on the screen (for example, the former maximum value is 100 times as much as the latter maximum value), obviously, the change characteristic of the motion parameter within the time period defined by the preset time interval does not totally match with the change characteristic of the double clicks by the user. It may be caused by the mobile phone which touches the human body twice during its falling. The first touch gesture and the second touch gesture are not the same touch gesture. Therefore, the accidental touch may be excluded by the change characteristic of the motion parameter within the time period defined by the preset time interval.

In a summary, with respect to the method for determining the touch gesture provided in the embodiments of the present disclosure, the accuracy to identify the touch gesture may be ensured by requesting to acquire the second induction signal from the second induction unit, and determining on the basis of the combination of the first touch gesture corresponding with the first induction signal and the first touch gesture corresponding with the second induction signal after the first induction unit acquires the first induction signal, so as to solve the technical problem that the touch gesture of the user may not be accurately identified only with the touch screen in the related arts, and the accuracy to identify the touch gesture may be improved.

With respect to the method for determining the touch gesture provided by the embodiment of the present disclosure, only when the interval between the generating time of the first induction signal and the generating time of the second induction signal or the second touch gesture corresponding with the second induction signal is less than the preset time interval threshold, whether the first touch gesture and the second touch gesture are the same gesture is determined, so as to be able to effectively avoid determining the accidental touch event caused during carry and transport as the normal touch gesture by the user.

It needs additional description that the above embodiment is illustrated only by the first induction unit as the touch chip and by the second induction unit as the motion sensor. In the actual application, the first induction unit may also be the motion sensor. At this time, the second induction unit is the touch chip. At this time, when sensing the motion parameter, the motion sensor requests to acquire the induction signal of the touch chip or the second touch gesture, and determines whether they are the same touch gesture according to the first touch gesture and the second touch gesture corresponding with the motion parameter. The detailed process is similar to the above embodiments, and will not be described in detail any more here.

With another possibly realized way, after acquiring the second induction signal, the second induction unit may actively report the sensed second induction signal or the second touch gesture determined by the second induction signal to the first induction unit. After acquiring the first induction signal, the first induction unit may determine the touch gesture according to the signal reported actively by the second induction unit. Specifically seeing Figure 3B, the following embodiment is illustrated by the first induction unit as the touch chip and by the second induction unit as the motion sensor.

Figure 3B is a flow chart showing a method for determining a touch gesture, according to another exemplary embodiment. The method for determining the touch gesture is used for the first induction unit, and comprises the following steps.

In step 305, acquiring the first induction signal after receiving the second induction signal or the second touch gesture sent by the second induction unit.

With respect to a possibly realized scene, once sensing the second induction signal, the second induction unit sends the sensed second induction signal to the first induction unit.

With respect to another possibly realized scene, when sensing the second induction signal, the second induction unit may firstly determine the second touch gesture corresponding with the second induction signal and send the determined second touch gesture to the first induction unit.

That is to say, when receiving the second induction signal or the second touch gesture sent by the second induction unit, the first induction unit may determine that the second induction unit senses the touch. At this time, to determine by the combination with the information sensed by the second induction unit, the first induction unit may determine whether it senses the first induction signal by self, that is, whether it acquires the first induction signal.

In the actual application, the second induction unit is generally relatively sensitive as the motion sensor, and may sense the very slight movement of the electronic device. This slight movement may not be generated by the touch of the screen, for example, it may be generated during the time of user-carry. Therefore, at this time, it generally has no determinating meaning to send the sensed second induction signal to the first induction unit. To reduce such meaningless transport of the second induction signal, and decrease the frequent interaction between the first induction unit and the second induction unit, the second induction unit sends the second induction signal to the first induction unit only when determining that the second induction signal corresponds with the touch gesture.

In view of this, the second induction signal received by the first induction unit is sent when the second induction unit determines that there exists the second touch gesture corresponding with the second induction signal. That is to say, when acquiring the second induction signal, the second induction unit may determine beforehand whether the second induction signal corresponds with the second touch gesture. If the second induction signal corresponds with the touch gesture, the second induction signal is sent to the first induction unit.

With respect to a possibly realized way, to ensure that the second induction unit may sense the second induction signal as much as possible in real time, the second induction unit may generally be set to be under a normally open state. The second induction unit under the normally open state is always kept to be an operating state and senses the second induction signal in real time. To reduce the power consumption of the first induction unit, the first induction unit may be set to be under a normally close state. The first induction unit under the normally close state is basically kept to be under a non-operating state, and enters into the operating state only when waken up by the second induction unit, to acquire the first induction signal.

When the second induction unit senses the second induction signal and reports the second touch gesture corresponding with the second induction signal to the first induction unit, the second induction unit may be determined to wake up the first induction unit. Or, before reporting the sensed second induction signal or the second touch gesture corresponding with the second induction signal to the first induction unit, the second induction unit firstly wakes up the first induction unit and re-sends the information acquisition request to the first induction unit waken up.

In step 306, determining the first touch gesture corresponding with the first induction signal.

The first induction unit may determine the first touch gesture corresponding with the first induction signal after acquiring the first induction signal.

In a possibly realized way, the first induction unit may determine the first touch gesture corresponding with the first induction signal according to the corresponding relation between the first induction signal and the preset touch gesture. The first induction unit may determine the second touch gesture corresponding with the second induction signal according to the corresponding relation between the second induction signal and the preset touch gesture.

In another possibly realized way, the first induction unit may store the classifier of the touch gesture in advance. After inputting the first induction signal into the classifier, the first induction unit acquires the output value output by the classifier, and determines the preset touch gesture corresponding with the first induction signal according to the corresponding relation between the output value and the preset touch gesture. Similarly, if the first induction unit receives the second induction signal reported by the second induction unit, the first induction unit may still input the second induction signal into the classifier, and determines the preset touch gesture corresponding with the second induction signal according to the corresponding relation between the output value and the preset touch gesture.

In step 307, When the interval between the generating time of the first induction signal and the generating time of the second induction signal / the second touch gesture is less than the preset time interval threshold, whether the first touch gesture corresponding with the first induction signal and the second touch gesture are the same touch gesture is determined, or the first touch gesture corresponding with the first induction signal and the second touch gesture are reported.

Similar to the embodiment in Figure 3A, the motion sensor is very sensitive to the motion of the electronic device. To avoid the determination error caused by this sensitivity, the first induction unit only considers the first induction signal and the second induction signal / the second touch gesture within the same time period, or only considers the first touch gesture and the second touch gesture generated within the same time period.

At this time, only when the interval between the generating time of the first induction signal and the generating time of the second induction signal / the second touch gesture is less than the preset time interval threshold, the first induction unit determines whether the first touch gesture corresponding with the first induction signal and the second touch gesture are the same touch gesture or reports the first touch gesture corresponding with the first induction signal and the second touch gesture.

The preset time interval threshold here is the preset time interval in the embodiment shown in Figure 3A, and will not be described in detail any more here.

In summary, with respect to the method for determining the touch gesture provided in the embodiment of the disclosure, the accuracy to identify the touch gesture may be ensured by acquiring the first induction signal sensed by itself, determining on the basis of according to the combination of the first touch gesture corresponding with the first induction signal and the second touch gesture corresponding with the second induction signal, after the acquired second induction unit reports the second induction signal or the second touch gesture, so as to solve the technical problem that the touch gesture of the user may not be accurately identified only with the touch screen in the related arts, and the accuracy to identify the touch gesture may be improved.

With respect to the method for determining the touch gesture provided by the embodiment of the present disclosure, only when the interval between the generating time of the first induction signal and the generating time of the second induction signal or the second touch gesture corresponding with the second induction signal is less than the preset time interval threshold, whether the first touch gesture and the second touch gesture are the same gesture is determined, so as to be able to effectively avoid determining the accidental touch event caused during carry and transport time as the normal touch gesture of the user.

It needs additional description that the above embodiment is illustrated only by the first induction unit as the touch chip and by the second induction unit as the motion sensor. In an actual application, the first induction unit may still be the motion sensor while the second induction unit is the touch chip. At this time, when sensing the induction signal, the touch chip actively reports the induction signal or the second touch gesture corresponding with the induction signal to the motion sensor. At this time, the motion sensor senses the motion parameter, acquires the first touch gesture corresponding with the motion parameter, and determines whether they are the same touch gesture. The detailed process is similar to the above embodiments, and will not be described in detail any more here.

It needs additional description that the above embodiments only determine the same touch gesture with respect to the first induction unit to reduce the calculation of the processor in the electronic device, and improve the determinating sensitiveness of the touch gesture due to the reduction of signal transmission between the first induction unit and the processor as well as that between the second induction unit and the processor.

The followings are the embodiments of the device of the disclosure and may be to carry out the embodiment of the method of the present disclosure. For the details which are not disclosed by the embodiments of the device of the disclosure, please refer to the embodiments of the method of the present disclosure.

Figure 4A is a flow chart showing a device for determining a touch gesture, according to an exemplary embodiment. As shown in Figure 4A, the device for determining the touch gesture is used for the touch chip or the motion sensor shown in Figure 1A and Figure 1B. The device for determining the touch gesture comprises but is not limited to the acquisition module 410 and the determination module 420.

The acquisition module 410 is configured to acquire the first induction signal and the second induction signal or the second touch gesture, and determine the second touch gesture corresponding with the second induction signal when the second induction signal has been acquired, wherein the first induction signal is a parameter induced and generated by the first induction unit, and the second induction signal is a parameter induced and generated by the second induction unit.

The determining module 420 is configured to determine the touch gesture has been detected, or to report the first touch gesture corresponding with the first induction signal and the second touch gesture, when the first touch gesture corresponding with the first induction signal and the second touch gesture are determined to be the same touch gesture.

The first induction unit is one of the touch chip and the motion sensor. The second induction unit is the other one of the touch chip and the motion sensor.

The determination module 420 is still configured to determine whether the first touch gesture corresponding with the first induction signal and the second touch gesture are the same touch gesture, or report the first touch gesture corresponding with the first induction signal and the second touch gesture, when the interval between the generating time of the first induction signal and the generating time of the second induction signal / the second touch gesture is less than the preset time interval threshold.

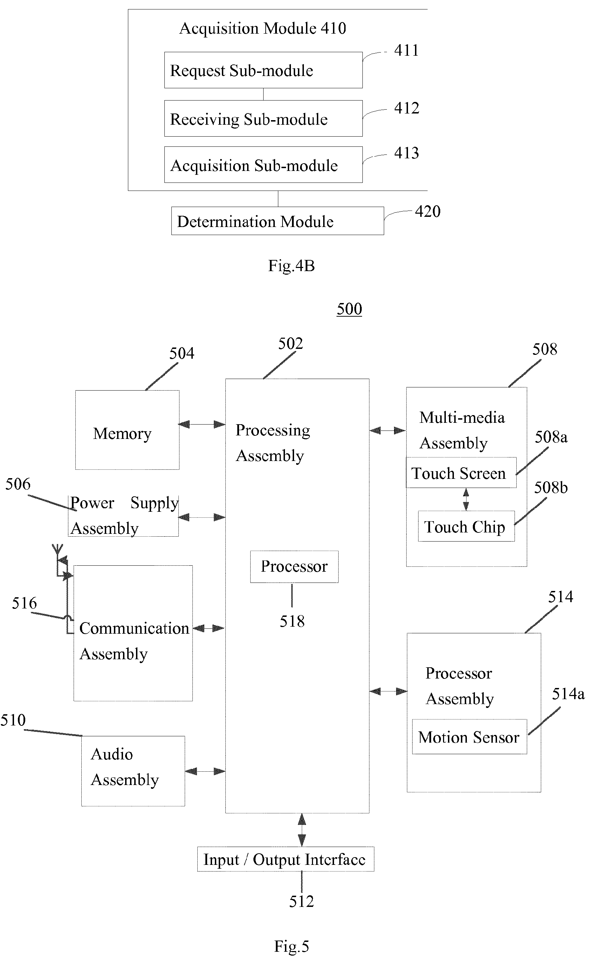

In a possibly realized way, Figure 4B shows a block diagram of a device for determining a touch gesture according to another exemplary embodiment. The acquisition module 410 comprises a request sub-module 411 and a receiving sub-module 412.

The request sub-module 411 is configured to send the information acquisition request to the second induction unit when determining that the first induction signal has been acquired. The information acquisition request is configured to trigger the second induction unit to feed back the second induction signal or the second touch gesture.

The receiving sub-module 412 is configured to receive the second induction signal or the second touch gesture fed back by the second induction unit.

In a possibly realized way, the acquisition sub-module 411 is still configured to send the information acquisition request to the second induction unit when determining that the first induction signal has been acquired and when there exists the first touch gesture corresponding with the first induction signal.

In a possibly realized way, still referring to Figure 4B, the acquisition module 410 still comprises an acquisition sub-module 413.

The acquisition sub-module 413 is configured to acquire the first induction signal after receiving the second induction signal or the second touch gesture sent by the second induction unit.

In a possibly realized way, the acquisition sub-module 413 is configured to receive the second induction signal sent when the second induction unit determines that there exists the second touch gesture corresponding with the second induction signal.

It needs an additional description that the above first induction unit is one of the touch chip and the motion sensor. The second induction unit is the other one of the touch chip and the motion sensor.

In addition, when the first induction unit is the touch chip and the second induction unit is the motion sensor, the first induction signal is a touch parameter generated when an induction screen of the touch chip is touched, and the second induction signal is a motion parameter generated when the motion sensor induces the motion of the electronic device.

The first induction signal is the motion parameter generated when the motion sensor induces the motion of the electronic device, and the second induction signal is the touch parameter generated when the induction screen of the touch chip is touched, when the first induction unit is the motion sensor and the touch chip is said touch chip.

In a summary, with respect to the device for determining the touch gesture provided in the embodiments of the present disclosure, the accuracy to identify the touch gesture may be ensured by requesting the second induction signal from the second induction unit, and determinating on the basis of the combination of the first touch gesture corresponding with the first induction signal and the first touch gesture corresponding with the second induction signal after the first induction unit acquires the first induction signal, so as to solve the technical problem that the touch gesture by the user may not be accurately identified only with the touch screen in the related arts, and the accuracy to identify the touch gesture may be improved.

With respect to the device for determining the touch gesture provided in the embodiments of the disclosure, the accuracy to identify the touch gesture may be ensured still by acquiring the first induction signal sensed by the second induction unit itself, determinating on the basis of the combination of the first touch gesture corresponding with the first induction signal and the second touch gesture corresponding with the second induction signal, after the acquired second induction unit reports the second induction signal or the second touch gesture, so as to solve the technical problem that the touch gesture by the user may not be accurately identified only with the touch screen in the related arts, and the accuracy to identify the touch gesture may be improved.

With respect to the device for determining the touch gesture provided by the embodiment of the present disclosure, only when the interval between the generating time of the first induction signal and the generating time of the second induction signal or the second touch gesture corresponding with the second induction signal is less than the preset time interval threshold, whether the first touch gesture and the second touch gesture are the same gesture is determined, so as to be able to effectively avoid determining the accidental touch event caused during carry and transport time as the normal touch gesture of the user.

For the device in the above embodiments, the detailed way of the operation of each module has been described in the embodiments of related methods, and hence will not be described in details any more here.

Figure 5 is a block diagram showing a device for determining a touch gesture, according to an exemplary embodiment. For example, the device 500 may be a mobile phone, the computer, a digital broadcast terminal, a message transceiving apparatus, a game console, a tablet apparatus, a medical apparatus, a fitness apparatus, a personal digital assistant, etc.

Referring to Figure. 5, the device 500 may include one or more of the following assemblies: a processing assembly 502, a memory 504, a power supply assembly 506, a multimedia assembly 508, an audio assembly 510, an input / output (I / O) interface 512, a sensor assembly 514, and a communications assembly 516.

The processing assembly 502 generally controls the whole operations of the device 500, for example, display, phone call, data communication, camera operation and record operation. The processing assembly 502 may include one or more processors 518 to implement an instruction to complete all or part of steps of the above methods. In addition, the processing component 502 may include one or more modules to conveniently process the interaction between the processing assembly 502 and other assemblies. For example, the processing component 502 may include a multimedia module to provide convenience for the interaction between the media assembly 508 and the processing assembly 502.

The memory 504 is configured to store various types of data to support the operation of the device 500. The examples of these data include the instruction of any application or method, contact data, address book data, a massage, a picture, a video, etc. and all of them are operated on the device 500. The memory 504 may be realized in form of any kind of volatile storage device and non-volatile storage device or combination thereof, for example, Static Random Access Memory (SRAM), Electrically-Erasable Programmable Read Only Memory (EEPROM), Erasable Programmable Read Only Memory (EPROM), Programmable Read Only Memory (PROM), Read Only Memory (ROM), a magnetic memory, a flash memory, a magnetic disk or an optical disk.

The power supply assembly 506 provides electricity for various assemblies of the device 500. The power supply assembly 506 may include a power supply management system, one or more power supplies, and other assemblies for generating, managing and distributing electricity to the device 500.

The multimedia component 508 includes a screen providing an output interface between the device 500 and the user. In some embodiments, the screen may be a Liquid Crystal Display (LCD) or a Touch Panel (TP). If the screen includes the touch panel, the screen may be implemented as a touch screen 508a to receive an input signal from the user. When the touch screen 508a is connected with the touch chip 508b to process the signal input by the user. The touch panel includes one or more touch sensors to sense the gestures of touching and sliding and the gestures on the touch panel. The touch sensor may not only sense the border of touch or sliding gesture but only detect the duration time and pressure related to touch or sliding operation. In some embodiments, the media assembly 508 includes one front-facing camera and/or one rear-facing camera. When the device 500 is under an operation mode, for example, a shooting mode or a video mode, the front-facing camera and/or the rear-facing camera may receive the media data from outside. Each of the front-facing camera and the rear-facing camera may be one fixed optical lens system or may have focal length or optical zoom ability.

The audio component 510 is configured to output and/or input an audio signal. For example, the audio assembly 510 includes one microphone (MIC). When the device 500 is under the operation mode, for example, a calling mode, a record mode and a speech identification mode, the microphone is configured to receive the audio signal from outside. The received audio signal may be further stored in the memory 504 or sent via the communication assembly 516. In some embodiments, the audio assembly 510 also include one loudspeaker configured to output the audio signal.

An I/O interface 512 provides an interface between the processing assembly 502 and a peripheral interface module. The above peripheral interface module may be a keyboard, a click wheel, a button, etc. These buttons may include but are not limited to a home button, a volume button, a starting button and a locking button.

The sensor assembly 514 includes one or more sensors and is configured to provide various aspects of the state assessment for the device 500. For example, the sensor assembly 514 may detect the opening / closing state of the device 500, and relative positioning of the assembly (for example, a display and a small keyboard of the device 500. The sensor assembly 514 may still detect the position change of the device 500 or one assembly of the device 500, the existence or non-existence of the contact between the user and the device 500, and the orientation or acceleration / deceleration and temperature change of the device 500. The sensor assembly 514 may include a proximity sensor configured to detect the presence of an adjacent object when there is no any physical contact. The sensor assembly 514 may also include an optical sensor (such as CMOS or a CCD image sensor) configured to be used in imaging application. In some embodiments, the sensor assembly 514 may also include the motion sensor, such as an acceleration sensor, a gyro sensor or the like, as well as other types of sensors, such as a magnetic sensor, a pressure sensor or a temperature sensor.

The communication module 516 is configured to facilitate the wired or wireless communication between the device 500 and other apparatuses. The device 500 may access the wireless network based on a communication standard, such as WiFi, 2G or 3G, or the combination thereof. In one exemplary embodiment, the communication assembly 516 receives a broadcast signal or broadcast associated information from an external broadcast management system via a broadcast channel. In one exemplary embodiment, the communication assembly 516 also includes a Near Field Communication (NFC) module, to facilitate short-range communication. For example, the NFC module may be implemented based on Radio Frequency Identification (RFID) technology, Infrared Data Association (IrDA) technology, Ultra-Wideband (UWB) technology, Bluetooth (BT) technology and other technologies.

In an exemplary embodiment, the device 500 may be implemented by one or more Application Specific Integrated Circuits (ASIC), a Digital Signal Processor (DSP), a Digital Signal Processing Device (DSPD), a Programmable Logic Device (PLD), a Field Programmable Gate Array (FPGA), a controller, a microcontroller, a microprocessor, or other electronic components.

In an exemplary embodiment, a non-transitory computer-readable storage medium comprising the instruction is also provided, for example, the memory 504 comprising the instruction. The above instruction may be implemented by the processor 518 of the device 50. For example, the non-transitory computer-readable storage medium may be a ROM, a random access memory (RAM), a CD-ROM, a magnetic tape, a floppy disk, an optical data storage devices and the like.

Those skilled in the art may think of easily other embodiments of the disclosure from consideration of the specification and practice of the invention disclosed here. This application is intended to cover any variations, uses, or adaptations of the invention following the general principles thereof and including such departures from the present disclosure as come within known or customary practice in the art. t is intended that the specification and examples be considered as exemplary only, with a true scope and spirit of the invention being indicated by the following claims.

It will be appreciated that the present disclosure is not limited to the exact construction that has been described above and illustrated in the accompanying drawings, and that various modifications and changes can be made without departing from the scope thereof. It is intended that the scope of the invention only be limited by the appended claims.

## Claims

1. A method for determining a touch gesture, **characterized in that** the method is used for electronic device comprising a first induction unit (102) and a second induction unit (103), both interconnected, the following steps are executed by utilizing the first induction unit:
acquiring (201) a first induction signal and a second induction signal or a second touch gesture, determining the second touch gesture corresponding with the second induction signal when the second induction signal has been acquired, wherein the first induction signal is a parameter induced and generated by the first induction unit, and the second induction signal is a parameter induced and generated by the second induction unit; and
determining (202) that the touch gesture has been detected, or reporting a first touch gesture corresponding with the first induction signal and the second touch gesture, when it is determined that the first touch gesture corresponding with the first induction signal and the second touch gesture are the same;
wherein the first induction unit is one of a touch chip (102) and a motion sensor (103), the second induction unit is the other one of the touch chip (102) and the motion sensor (103).

2. The method according to claim 1, **characterized in that** acquiring the first induction signal and the second induction signal or the second touch gesture comprises:
sending an information acquisition request (302) to the second induction unit when determining that the first induction signal (303) has been acquired, wherein the information acquisition request is configured to trigger the second induction unit to feed back the second induction signal or the second touch gesture; and
receiving the second induction signal or the second touch gesture fed back by the second induction unit.

3. The method according to claim 2, **characterized in that** when determining that the first induction signal has been acquired, sending the information acquisition request to the second induction unit comprises:
determining that the first induction signal has been acquired, and sending the information acquisition request to the second induction unit when there exists the first touch gesture corresponding with the first induction signal.

4. The method according to claim 1, **characterized in that** acquiring the first induction signal and the second induction signal or the second touch gesture comprises:
acquiring (305) the first induction signal after receiving the second induction signal or the second touch gesture sent by the second induction unit.

5. The method according to claim 4, **characterized in that** receiving the second induction signal sent by the second induction unit comprises:
receiving the second induction signal sent when the second induction unit determines that there exists the second touch gesture corresponding with the second induction signal.

6. The method according to any of claims 1-5, **characterized in that** when it is determined that the first touch gesture corresponding with the first induction signal and the second touch gesture are the same , determining the touch gesture has been detected, or reporting the first touch gesture corresponding with the first induction signal and the second touch gesture comprises:
determining (307) whether the first touch gesture corresponding with the first induction signal and the second touch gesture are the same touch gesture, or reporting the first touch gesture corresponding with the first induction signal and the second touch gesture, when the interval between the generating time of the first induction signal and the generating time of the second induction signal / the second touch gesture is less than a preset time interval threshold.

7. The method according to any of claims 1-5, **characterized in that** when the first induction unit is the touch chip and the second induction unit is the motion sensor, the first induction signal is a touch parameter generated when an induction screen of the touch chip is touched, and the second induction signal is a motion parameter generated when the motion sensor induces the motion of the electronic device; and
the first induction signal is the motion parameter generated when the motion sensor induces the motion of the electronic device, and the second induction signal is the touch parameter generated when the induction screen of the touch chip is touched, when the first induction unit is the motion sensor and the touch chip is said touch chip.

8. A device for determining a touch gesture, being **characterized in that** the device is applied in electronic device comprising a first induction unit and a second induction unit which are interconnected, and comprises
an acquisition (410) module configured to acquire a first induction signal and a second induction signal or a second touch gesture, and determine the second touch gesture corresponding with the second induction signal when the second induction signal has been acquired, wherein the first induction signal is a parameter induced and generated by the first induction unit, the second induction signal is a parameter induced and generated by the second induction unit; and
a determining module (441) configured to determine that the touch gesture has been detected, or report a first touch gesture corresponding with the first induction signal and the second touch gesture, when it is determined that the first touch gesture corresponding with the first induction signal and the second touch gesture are the same;
wherein the first induction unit is one of a touch chip (102) and a motion sensor (103), the second induction unit is the other one of the touch chip (102) and the motion sensor (103).

9. A device according to claim 8, **characterized in that** the acquisition module comprises:
a request sub-module configured to send an information acquisition request to the second induction unit when determining that the first induction signal has been acquired, wherein the information acquisition request is configured to trigger the second induction unit to feed back the second induction signal or the second touch gesture; and
a receiving sub-module (412) configured to receive the second induction signal or the second touch gesture fed back by the second induction unit.

10. A device according to claim 9, **characterized in that** the request sub-module is still configured to:
send the information acquisition request to the second induction unit, when determining that the first induction signal has been acquired, and when there exists the first touch gesture corresponding with the first induction signal.

11. A device according to claim 8, **characterized in that** the acquisition module further comprises:
an acquisition sub-module (413) configured to acquire the first induction signal after receiving the second induction signal or the second touch gesture sent by the second induction unit;
and the acquisition sub-module is still configured to:
receive the second induction signal sent when the second induction unit determines that there exists the second touch gesture corresponding with the second induction signal.

12. The method according to any of claims 8-11, **characterized in that** the determining module is still configured to:
determine whether the first touch gesture corresponding with the first induction signal and the second touch gesture are the same touch gesture, or report the first touch gesture corresponding with the first induction signal and the second touch gesture, when the interval between the generating time of the first induction signal and the generating time of the second induction signal / the second touch gesture is less than a preset time interval threshold.

13. The method according to any of claims 8-11, **characterized in that** when the first induction unit is the touch chip and the second induction unit is the motion sensor, the first induction signal is a touch parameter generated when an induction screen of the touch chip is touched, and the second induction signal is a motion parameter generated when the motion sensor induces the motion of the electronic device; and
the first induction signal is the motion parameter generated when the motion sensor induces the motion of the electronic device, and the second induction signal is the touch parameter generated when the induction screen of the touch chip is touched, when the first induction unit is the motion sensor and the touch chip is said touch chip.

14. A computer program including instructions for executing the steps of a method for determining a touch gesture according to claim 1 when said program is executed by a computer.

15. A recording medium readable by a computer and having recorded thereon a computer program including instructions for executing the steps of a method for determining a touch gesture according to any one of claims 1 to 7.
